# EUROPEAN PATENT SPECIFICATION

(11) **EP 2 054 187 B1**
(45) Date of publication and mention of the grant of the patent: **13.06.2012**
(21) Application number: 07804650.5
(22) Date of filing: 27.07.2007
(51) Int. Cl.: B23K 1/012, B23K 3/06

(54) **AIR SOLDERING UNIT**
LUFTLÖTEINHEIT
UNITÉ DE SOUDURE À AIR

(30) Priority: 28.07.2006 IT MO20060243
(43) Date of publication of application: 06.05.2009
(73) Proprietor: Meta System S.p.A., 42100 Reggio Emilia (IT)
(72) Inventor: ZAMBONINI, Sergio, I-42027 Montecchio Emilia (IT)
(74) Representative: Brunacci, Marco
(86) International application number: PCT/IB2007/002141
(87) International publication number: WO 2008/012663

(56) References cited:
- DE-U1- 9 104 818
- US-A- 5 735 451
- US-A1- 2003 127 498
- US-A1- 2003 168 498

## Description

The present invention refers to an air soldereing unit, which can be particularly used for soldering automated processes.

### Background art

The need is known to carry out automated or semi-automated soldering jobs on printed circuits, wiring or small-sized masses.

A first known soldering technique provides for the use of automated systems for moving a laser beam emission and focussing device.

These systems, although finding wide use in industry for the precision soldering on electronic circuits, are not convenient for every type of use due to their high costs.

With particular reference to carrying out spot soldering on electronic circuit boards, a second soldering technique provides for the use of soldering units comprising a first device for the emission of a flow of hot air onto an area to be heated, on the lower side of the board.

Such first device is generally composed of an air heating station to which is connected, through a pipe, a nozzle for the delivery of the flow of hot air.

Simultaneously, a second device of the soldering unit, which supports a metal material with a low casting temperature, of the tin, tin alloy type or the like, approaches the upper side of the board, until the material comes into contact with the heated area.

The heat thus transmitted by conduction leads to the material's casting, depositing onto the heated area, by a spot to be soldered.

The operation is subsequently repeated for the execution of further spot soldering.

These known soldering units are not however without drawbacks, among which the fact is underlined that of the presence of two separate devices, one for the emission of the flow of hot air and one for depositing the metal material, significantly complicates the soldering process and implies, at the same time, the use of complex automation technologies to synchronise the two devices.

Another disadvantage of the known soldering units consists in the big overall dimensions, deriving especially from the big size of the heating station used.

A further disadvantage is the low level of precision achieved by such soldering units: the area heated by the flow of hot air emitted from the nozzle is, indeed, considerably larger than the effective surface to be soldered.

An air soldering unit comprising an heating and injection device for heating and injecting an air flow over an area to be soldered and dosing and positioning means for dosing and positioning a castable metal material by the area to be soldered is known from document DE-U-91 04 818.

However, even this device can be improved, particularly in order to allows the maintenance of the temperature of the heating and injection device below potentially harmful temperatures.

### Object of the Invention

The main aim of the present invention is to provide an air soldering unit that allows to simplify considerably the soldering process.

Within the scope of such technical aim, another object of the present invention is to reduce the overall dimensions of the equipment and devices used.

Another object of the invention is to increase the precision of the soldering process compared to known air soldering units.

Another object of the invention is to cater for the above aims with a simple structure, of relatively practical implementation, safe to use and with effective operation, as well as having a relatively low cost.

The above described objects are all achieved by the present air soldering unit, characterised in that it comprises a base stand for supporting at least one heating and injection device for heating and injecting at least one air flow over an area to be soldered and dosing and positioning means for dosing and positioning a castable metal material by said area to be soldered.

### Brief Description of the Drawings

Further characteristics and advantages of the present invention will appear even more evident from the detailed description of a preferred, but not exclusive, embodiment of an air soldering unit, illustrated by way of non limiting example in the accompanying drawings, wherein:

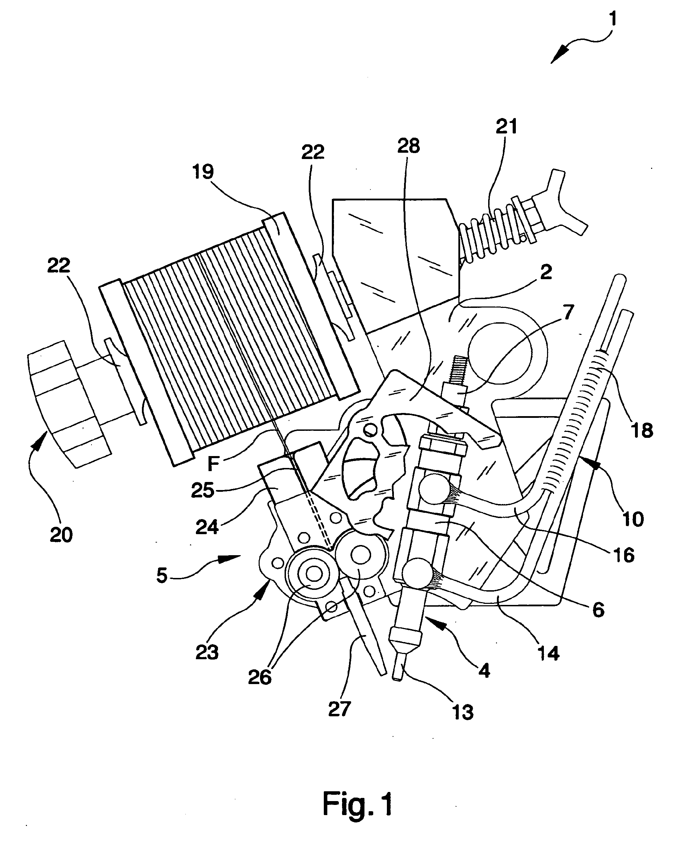

the figure 1 is a side view, schematic and in partial section of the soldering unit according to the invention;
the figure 2 is an exploded view and in partial section of a heating and injection device of an air flow of the soldering unit according to the invention;
the figure 3 is a side view and in partial section of the heating and injection device of the soldering unit according to the invention;

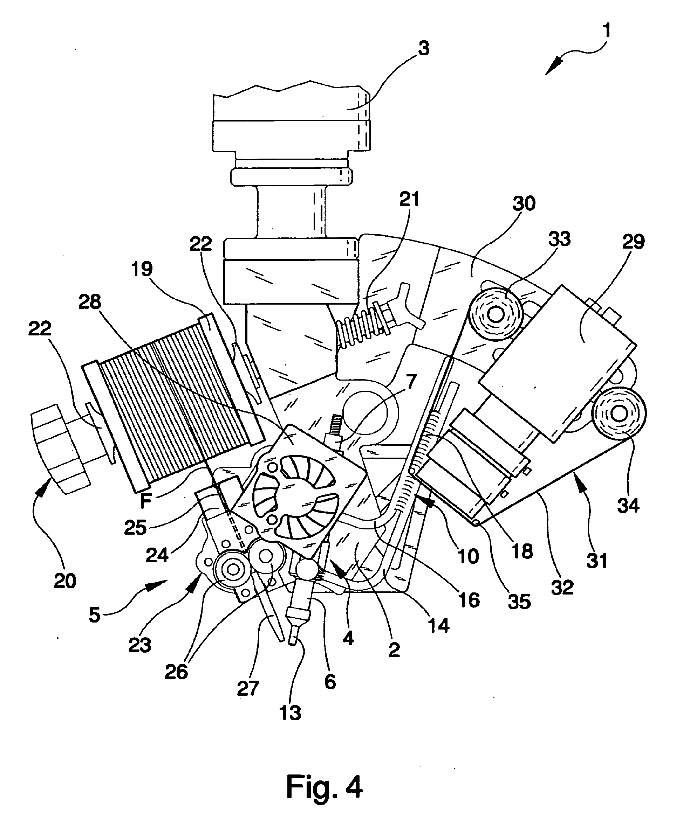

the figure 4 is a side and schematic view of the soldering unit according to the invention applied to automated means of movement.

### Embodiments of the Invention

With particular reference to such figures, an air soldering unit, particularly of the type used for soldering components on printed circuits, for soldering cables and for soldering small size masses has been globally designated by reference number 1.

The soldering unit 1 comprises a substantially plate-shaped base stand 2 which can be associated with automated means of movement 3, of the robot arm type or the like, and which is the support for a heating and injection device 4 of an air flow over an area to be soldered and for dosing and positioning means 5 for dosing and positioning a material, of the metal type, which can be cast by the area to be soldered.

In particular, the heating and injection device 4 comprises a body 6 which has a substantially hollow and elongated cylindrical conformation, open at the end, which is suitable for housing a heating element 7 and which has a dispensing mouth 8 of the above mentioned air flow.

Advantageously, the heating element 7 can be composed of an incandescent spark plug of the type commonly used when starting diesel engines.

The body 6 comprises an inner first chamber 9 which has the dispensing mouth 8, which houses a first section 7a of the heating element 7 suitable for generating heat and which is associated with air inlet means 10.

With particular but not limited reference to the specific enbodiment of the invention herein described, the first section 7a is housed inside the first chamber 9 at a front section of the body 6 and is made up of the metal globe of the spark plug 7. In an assembly configuration, wherein the spark plug 7 is housed inside the body 6, an interspace is defined between the inner surface of the first chamber 9 and the outer surface of the metal globe 7a; this interspace allows for the recirculation of the air introduced by the inlet means 10 around the metal globe 7a and towards the outside through the dispensing mouth 8.

The body 6 also comprises an inner second chamber 11 which houses a second section 7b to be cooled of the heating element 7, which is associated with the air inlet means 10 and has an exit port 12 for the air entered.

In the assembly configuration and with particular reference to the specific embodiment herein described, an interspace is defined between the inner surface of the second chamber 11 and the outer surface of the second section 7b of the metal body of the spark plug 7; this interspace allows for the recirculation of the air introduced by the inlet means 10 around the second section 7b and towards the outside through the exit port 12 for cooling the second section 7b.

It must be pointed out the words "front" and "rear" are used in this description and in a non-exclusive way with reference to the standard arrangement of the body 6 in relation to the direction of delivery of the air flow towards the area to be soldered.

Advantageously, threaded means are provided that allow for the screwing and unscrewing of the spark plug 7 inside the body 6 and which are composed of a screw 7c defined on the outer side surface at a substantially middle section of the spark plug 7 and of a corresponding nut screw 6d defined on a portion of the inner side surface of the body 6.

Usefully, the dispensing mouth 8 and the exit port 12 are defined at a first and a second end 6a and 6b respectively of the body 6 opposite each other.

Advantageously, a nozzle 13 can be associated removable with the first end 6a at the dispensing mouth 8. In particular, threaded means are provided which allow for the screwing and unscrewing of the nozzle 13 from the first end 6a and which are made up of a screw 6c defined on the outer side surface of such first end 6a and of a correspondant nut screw 13a defined on the inner side surface of the nozzle 13.

Different conformations of the nozzles 13 may be usefully provided which can be used according to the size of the surface to be soldered and to the precision of the soldering to be carried out.

The inlet means 10 comprise a first pipe 14 for blowing air which has an end associated with a first supply hole 15 defined through the body 6, at the first chamber 9, and the opposite end associated with compressed air generation means.

A second pipe 16 for cooling has an end associated with a second supply hole 17 defined through the body 6, at the second chamber 11, and the opposite end associated with compressed air generation means.

Usefully, the inlet means 10 comprise a heat exchanger 18 which, together with the flow of cold air that goes through the second pipe 16, is suitable for levelling and controlling the temperature of the first and second pipe 14 and 16. In particular, the first and second pipe 14 and 16 are made out of metal material and the heat exchanger 18 is made of a soldering which extends along a section between these.

The dosing and positioning means 5 comprise a spool 19 which is associated in rotation with the base stand 2 and around which is wound a wire F of castable metal material, of the tin, tin alloy type or the like.

In particular, the soldering unit 1 comprises support means 20 comprising a shaft 21 fixed onto the base stand 2 and inserted inside the hole of the spool 19; the shaft 21 has a pair of centring washers 22 which can be positioned on the opposite sides of the spool 19.

The dosing and positioning means 5 also comprise a feeding device 23 of the free end of the wire F unwound from the spool 19 towards the area to be soldered.

The feeding device 23 comprises a support element 24 having a straight guide channel 25 for guiding the sliding of the wire F, of a hole, a groove type or the like which extends along a section of the support element 24. Two wheels 26 rotating in opposite directions, of which at least one is driving, are supported by the support element 24 and are arranged along a section of the channel 25, with the wire F engaged between these.

The wire F moved by the pair of wheels 26 is inserted inside a cannula 27, which has an end fixed to the support element 24, at the channel 25 and axially with respect to this, and a free end protruding with respect to the support element 24 and positionable on the area to be soldered.

The feeding device 23 also comprises at least one sensor of, for example, the infrared type for detecting the position of the free end of the wire F. Such sensor, not shown in the figures above, is associated with the support element 24, at a surface substantially opposite with respect to the surface having the channel 25.

Advantageously, the soldering unit 1 can comprise a fan 28, associated with the base stand 2 and suitable for cooling the heating and injection device 4.

For a more accurate view of the soldering process and for a more accurate control of the automated means of movement, the soldering unit 1 can comprise optical survey means 29 of the area to be soldered.

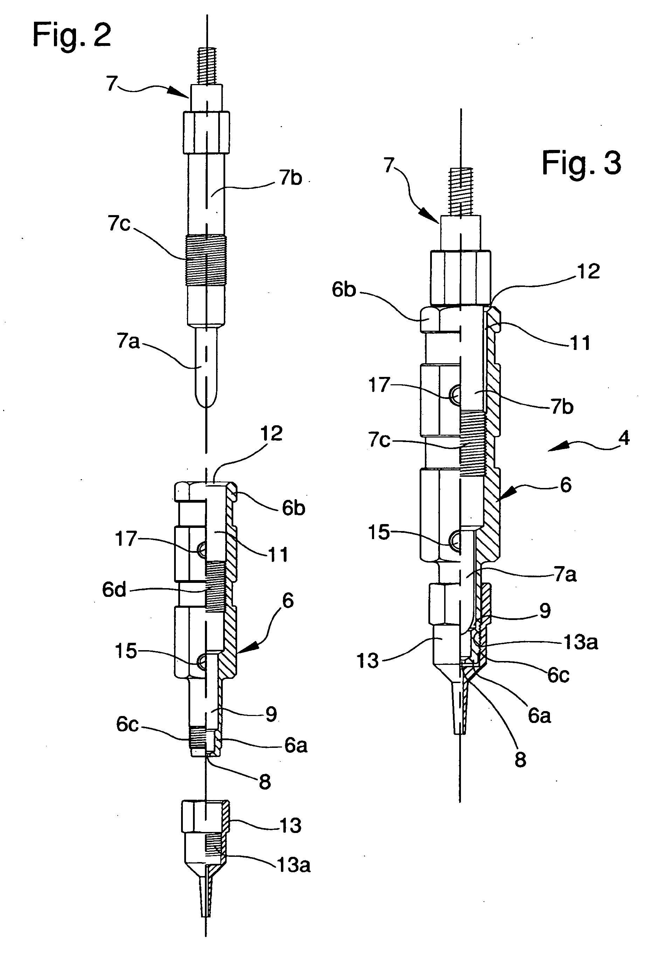

As shown in the figure 3, such optical survey means 29 can be composed of a video camera (or the like) positionable on a supplementary stand 30 that extends from the base stand 2. Advantageously, the supplementary stand 30 is substantially plate-shaped and has a series of positions for fixing the video camera 29.

Usefully, protection and/or cleaning means 31 are provided for the lens of the video camera 29 suitable for ensuring the integrity of the video camera 29 over time, protecting it from the effect of the poisonous gases generated by the casting of the tin wire during the soldering process.

The protection and/or cleaning means 31 comprise a protection tape 32 made out of substantially transparent material, of the acetate type or the like, and actuator means for sliding the tape 32 with at least one section arranged at the outer surface of the lens of the video camera 29.

In particular, the actuator means comprise a first cylinder 33, freely turnable, arranged near one side of the video camera 29 and on which the tape 32 is at least partially wound. A second cylinder 34 turnable by means of motor means is arranged on the opposite side of the video camera 29, associated with one end of the tape 32 and suitable for dragging the tape 32. Two tensioning elements 35 are arranged on opposite sides near the lens and keep a portion of the tape 32 stretched between the first and the second cylinder 33 and 34, with one section of it arranged by the lens of the video camera 29.

The tape 32, therefore, unwinds from the first cylinder 33 and wraps around the second cylinder 34 and the reels of tape 32 used can be replaced once exhausted.

The operation of the invention is the following.

The robot arm 3 moves the soldering unit 1 until it is placed together with the nozzle 13 and the cannula 27 near the area to be soldered.

The input of air into the first chamber 9 through the first pipe 14 and the simultaneous start of the spark plug 7 by incandescence of the metal globe 7a, allow to heat the air flow which is directed and oriented by the nozzle 13 towards the area to be soldered.

At the same time, the air entering the inside of the second chamber 11 through the second pipe 16 allows for the maintenance of the temperature of the heating and injection device 4 below potentially harmful temperatures.

The wheels 26 of the feeding device 25 turn dragging the wire F and pushing its free end through the cannula 27, until it comes into contact with the area to be soldered.

The accumulated heat of the area to be soldered together with the heat of the air flow exiting from the nozzle 13 produce the casting of a part of the metal material which composes the wire F, which is deposited on the area to be soldered.

The soldering unit 1 is subsequently moved away from the soldered area and/or positioned by a new area to be soldered.

It has in practice been seen how the described invention achieves the intended objects and in particular the fact is underlined that the presence in this same soldering unit of the heating and injection device and of the dosing and positioning means considerably simplifies the soldering process.

Another advantage comes from the particular conformation and from the special elements composing the heating and injection device which allow the soldering unit to be less bulky.

The presence of one or more nozzles with variable section and flow allow, moreover, for the variation and considerable increase in the precision of the soldering process.

Another advantage comes from the simple structure of the soldering unit which, together with the use of commonly used and easily available components such as, for example, the incandescent spark plug, allows for the significant reduction of the general cost of manufacturing the unit itself and, as a consequence, the general costs of the soldering process.

The invention thus conceived is susceptible of numerous modifications and variations, all of which falling within the scope of the inventive concept. Furthermore all the details may be replaced by other elements which are technically equivalent.

In practice, the contingent shapes and dimensions may be any according to requirements without because of this moving outside the protection scope of the following claims.

## Claims

1. Air soldering unit (1), comprising a base stand (2) for supporting at least one heating and injection device (4) for heating and injecting at least one air flow over an area to be soldered and dosing and positioning means (5) for dosing and positioning a castable metal material by said area to be soldered, wherein said heating and injection device (4) comprises a body (6) for housing at least one heating element (7) and wherein said body (6) comprises at least one dispensing mouth (8) of said air flow, **characterised in that** said body (6) comprises at least one inner first chamber (9) which has said dispensing mouth (8) and which houses at least a first section (7a) of said heating element (7) suitable for generating heat and at least an inner second chamber (11) which houses at least a second section (7b) to be cooled of said heating element (7), said first chamber (9) and said second chamber (11) being associated with air inlet means (10).

2. Unit (1) according to claim 1, **characterized in that** said base stand (2) can be associated with automated means of movement (3).

3. Unit (1) according to claim 1, **characterized in that** said inner second chamber (11) comprises at least one air exit port (12).

4. Unit (1) according to one of the preceding claims, **characterized in that** said body (6) has a substantially hollow and elongated cylindrical conformation.

5. Unit (1) according to one of the preceding claims, **characterized in that** said dispensing mouth (8) is defined at a first end (6a) of said body (6).

6. Unit (1) according to claim 3, **characterized in that** said exit port (12) is defined at a second end (6b) of said body (6) opposite to said first end (6a).

7. Unit (1) according to one of the preceding claims, **characterized in that** said heating element (7) is of the spark plug type for diesel engines.

8. Unit (1) according to one of the preceding claims, **characterized in that** said heating element (7) is of the incandescence spark plug type.

9. Unit (1) according to one of the preceding claims, **characterized in that** said heating and injection device (4) comprises at least one nozzle (13) for the delivery of said air flow which can be associated removable with said body (6) at said dispensing mouth (8).

10. Unit (1) according to one of the preceding claims, **characterized in that** said inlet means (10) comprise at least a first pipe (14) with an end associated with at least a first supply hole (15) on said body (6), at said inner first chamber (9), and with the opposite end associated with compressed air generation means, and at least a second pipe (16) with an end associated with at least a second supply hole (17) on said body (6), at said inner second chamber (11), and with the opposite end associated with compressed air generation means.

11. Unit (1) according to claim 10, **characterized in that** said inlet means (10) comprise at least a heat exchanger (18) placed in between said first and said second pipe (14, 16).

12. Unit (1) according to one of the preceding claims, **characterized in that** said dosing and positioning means (5) comprise at least one spool (19) associated in rotation with said base stand (2) and around which is wound a wire (F) of said metal material.

13. Unit (1) according to claim 12, **characterized in that** said dosing and positioning means (5) comprise at least one feeding device (23) of the free end of said wire (F) of metal material from said spool (19) towards said area to be soldered.

14. Unit (1) according to claim 13, **characterized in that** said feeding device (23) comprises at least one pair of wheels (26) rotating in opposite directions, of which one is driving, between which said wire (F) of metal material is inserted.

15. Unit (1) according to claim 12, **characterized in that** said dosing and positioning means (5) comprise at least one sensor for detecting the position of said free end of the wire (F).

16. Unit (1) according to claim 12, **characterized in that** said dosing and positioning means (5) comprise at least one cannula (27) with a free end which can be positioned on said area to be soldered and inside which said wire (F) of metal material is inserted sliding.

17. Unit (1) according to one of the preceding claims, **characterized in that** it comprises at least one cooling fan (28) of said heating and injection device (4).

18. Unit (1) according to one of the preceding claims, **characterized in that** it comprises optical survey means (29) of said area to be soldered.

19. Unit (1) according to claim 18, **characterized in that** said optical survey means (29) are of a video camera type.

20. Unit (1) according to claim 19, **characterized in that** it comprises protection and/or cleaning means (31) for the lens of said video camera.

21. Unit (1) according to claim 20, **characterized in that** said protection and/or cleaning means (31) comprise at least one substantially transparent tape (32) and actuator means (33, 34) for sliding said tape with at least one section arranged at the outer surface of the lens of said video camera.

## Patentansprüche

1. Luftlöteinheit (1) mit einem Basisgestell (2) zum Halten mindestens einer Heiz- und Eindüsvorrichtung (4) zum Heizen und Eindüsen mindestens eines Luftstroms über einen zu lötenden Bereich und einer Dosier- und Positioniereinrichtung (5) zum Dosieren und Positionieren eines gießbaren Metallmaterials durch den zu lötenden Bereich, wobei die Heiz- und Eindüsvorrichtung (4) einen Körper (6) zum Aufnehmen mindestens eines Heizelements (7) aufweist und der Körper (6) mindestens eine Ausgabeöffnung (8) für den Luftstrom aufweist, **dadurch gekennzeichnet, dass** der Körper (6) mindestens eine innere erste Kammer (9), welche die Ausgabeöffnung (8) hat und mindestens einen ersten Abschnitt (7a) des für das Erzeugen von Wärme geeigneten Heizelements (7) aufnimmt, und mindestens eine innere zweite Kammer (11), welche mindestens einen zweiten zu kühlenden Abschnitt (7b) des Heizelements (7) aufnimmt, aufweist, wobei die erste Kammer (9) und die zweite Kammer (11) mit einer Lufteintrittseinrichtung (10) verbunden sind.

2. Einheit (1) nach Anspruch 1, **dadurch gekennzeichnet, dass** das Basisgestell (2) mit einer automatisierten Bewegungseinrichtung (3) verbunden werden kann.

3. Einheit (1) nach Anspruch 1, **dadurch gekennzeichnet, dass** die innere zweite Kammer (11) mindestens eine Luftaustrittsöffnung (12) aufweist.

4. Einheit (1) nach einem der vorangegangenen Ansprüche, **dadurch gekennzeichnet, dass** der Körper (6) eine im Wesentlichen hohle und verlängerte, zylindrische Gestalt hat.

5. Einheit (1) nach einem der vorangegangenen Ansprüche, **dadurch gekennzeichnet, dass** die Ausgabeöffnung (8) an einem ersten Ende (6a) des Körpers (6) definiert wird.

6. Einheit (1) nach Anspruch 3, **dadurch gekennzeichnet, dass** die Austrittsöffnung (12) an einem zweiten Ende (6b) des Körpers (6) gegenüber dem ersten Ende (6a) definiert wird.

7. Einheit (1) nach einem der vorangegangenen Ansprüche, **dadurch gekennzeichnet, dass** das Heizelement (7) von der Art einer Zündkerze für Dieselmotoren ist.

8. Einheit (1) nach einem der vorangegangenen Ansprüche, **dadurch gekennzeichnet, dass** das Heizelement (7) von der Art einer Glühzündkerze ist.

9. Einheit (1) nach einem der vorangegangenen Ansprüche, **dadurch gekennzeichnet, dass** die Heiz- und Eindüsvorrichtung (4) mindestens eine Düse (13) für die Lieferung des Luftstroms, die mit dem Körper (6) an der Ausgabeöffnung (8) entfernbar verbunden werden kann, aufweist.

10. Einheit (1) nach einem der vorangegangenen Ansprüche, **dadurch gekennzeichnet, dass** die Eintrittseinrichtung (10) mindestens ein erstes Rohr (14), bei dem ein Ende mit mindestens einem ersten Zufuhrloch (15) auf dem Körper (6) an der inneren ersten Kammer (9) verbunden ist und das gegenüberliegende Ende mit einer Druckluft erzeugenden Einrichtung verbunden ist, und mindestens ein zweites Rohr (16), bei dem ein Ende mit mindestens einem zweiten Zufuhrloch (17) auf dem Körper (6) an der inneren zweiten Kammer (11) verbunden ist und das gegenüberliegende Ende mit einer Druckluft erzeugenden Einrichtung verbunden ist, aufweist.

11. Einheit (1) nach Anspruch 10, **dadurch gekennzeichnet, dass** die Eintrittseinrichtung (10) mindestens einen zwischen dem ersten und dem zweiten Rohr (14, 16) gelegenen Wärmetauscher (18) aufweist.

12. Einheit (1) nach einem der vorangegangenen Ansprüche, **dadurch gekennzeichnet, dass** die Dosier- und Positioniereinrichtung (5) mindestens eine Spule (19), die in der Drehung mit dem Basisgestell (2) verbunden ist und um die ein Draht (F) aus dem Metallmaterial gewunden ist, aufweist.

13. Einheit (1) nach Anspruch 12, **dadurch gekennzeichnet, dass** die Dosier- und Positioniereinrichtung (5) mindestens eine Vorschubvorrichtung (23) für das freie Ende des Drahts (F) aus Metallmaterial von der Spule (19) in Richtung des zu lötenden Bereichs aufweist.

14. Einheit (1) nach Anspruch 13, **dadurch gekennzeichnet, dass** die Vorschubvorrichtung (23) mindestens ein Paar in entgegengesetzte Richtungen drehender Räder (26), von denen eines antreibt, zwischen welche der Draht (F) aus Metallmaterial eingeführt wird, aufweist.

15. Einheit (1) nach Anspruch 12, **dadurch gekennzeichnet, dass** die Dosier- und Positioniereinrichtung (5) mindestens einen Sensor zum Erkennen der Position des freien Endes des Drahts (F) aufweist.

16. Einheit (1) nach Anspruch 12, **dadurch gekennzeichnet, dass** die Dosier- und Positioniereinrichtung (5) mindestens eine Kanüle (27) mit einem freien Ende, das auf dem zu lötenden Bereich positioniert werden kann und innerhalb dessen der Draht (F) aus Metallmaterial gleitend eingeführt wird, aufweist.

17. Einheit (1) nach einem der vorangegangenen Ansprüche, **dadurch gekennzeichnet, dass** sie mindestens ein Kühlgebläse (28) der Heiz- und Eindüsvorrichtung (4) aufweist.

18. Einheit (1) nach einem der vorangegangenen Ansprüche, **dadurch gekennzeichnet, dass** sie eine optische Überwachungseinrichtung (29) für den zu lötenden Bereich aufweist.

19. Einheit (1) nach Anspruch 18, **dadurch gekennzeichnet, dass** die optische Überwachungseinrichtung (29) von der Art einer Videokamera ist.

20. Einheit (1) nach Anspruch 19, **dadurch gekennzeichnet, dass** sie eine Schutz- und/oder Reinigungseinrichtung (31) für die Linse der Videokamera aufweist.

21. Einheit (1) nach Anspruch 20, **dadurch gekennzeichnet, dass** die Schutz- und/oder Reinigungseinrichtung (31) mindestens ein im Wesentlichen transparentes Band (32) und eine Verstelleinrichtung (33, 34) zum Verschieben des Bandes mit mindestens einem an der äußeren Oberfläche der Linse der Videokamera angeordneten Abschnitt aufweist.

## Revendications

1. Unité (1) de soudage à air, comprenant un support (2) de base destiné à supporter au moins un dispositif (4) de chauffage et d'injection pour chauffer et injecter au moins un flux d'air sur une zone à souder, et des moyens (5) de dosage et de positionnement pour doser et positionner un matériau métallique moulable par rapport à ladite zone à souder, dans laquelle ledit dispositif (4) de chauffage et d'injection comprend un corps (6) destiné à accueillir au moins un élément chauffant (7) et dans laquelle ledit corps (6) comprend au moins un orifice distributeur (8) dudit flux d'air, ***caractérisée en ce que*** ledit corps (6) comprend au moins une première chambre intérieure (9) qui possède ledit orifice distributeur (8) et qui accueille au moins une première section (7a) dudit élément chauffant (7) apte à générer de la chaleur, et au moins une deuxième chambre intérieure (11) qui accueille au moins une deuxième section (7b) à refroidir dudit élément chauffant (7), ladite première chambre (9) et ladite deuxième chambre (11) étant associées à des moyens (10) d'entrée d'air.

2. Unité (1) selon la revendication 1, ***caractérisée en ce que*** ledit support (2) de base peut être associé à des moyens automatisés de mouvement (3).

3. Unité (1) selon la revendication 1, ***caractérisée en ce que*** ladite deuxième chambre intérieure (11) comprend au moins un orifice (12) de sortie d'air.

4. Unité (1) selon l'une des revendications précédentes, ***caractérisée en ce que*** ledit corps (6) possède une conformation sensiblement cylindrique creuse et allongée.

5. Unité (1) selon l'une des revendications précédentes, ***caractérisée en ce que*** ledit orifice distributeur (8) est défini à une première extrémité (6a) dudit corps (6).

6. Unité (1) selon la revendication 3, ***caractérisée en ce que*** ledit orifice de sortie (12) est défini à une deuxième extrémité (6b) dudit corps (6) opposée à ladite première extrémité (6a).

7. Unité (1) selon l'une des revendications précédentes, ***caractérisée en ce que*** ledit élément chauffant (7) est du type bougie d'allumage pour moteurs diesel.

8. Unité (1) selon l'une des revendications précédentes, ***caractérisée en ce que*** ledit élément chauffant (7) est du type bougie incandescente.

9. Unité (1) selon l'une des revendications précédentes, ***caractérisée en ce que*** ledit dispositif (4) de chauffage et d'injection comprend au moins une buse (13) pour l'émission dudit flux d'air qui peut être associée de manière amovible audit corps (6) sur ledit orifice distributeur (8).

10. Unité (1) selon l'une des revendications précédentes, ***caractérisée en ce que*** lesdits moyens (10) d'entrée comprennent au moins un premier conduit (14) avec une extrémité associée à au moins un premier orifice d'alimentation (15) sur ledit corps (6), au niveau de ladite première chambre intérieure (9), et avec l'extrémité opposée associée à des moyens de génération d'air comprimé, et au moins un deuxième conduit (16) avec une extrémité associée avec au moins un deuxième orifice d'alimentation (17) sur ledit corps (6), au niveau de ladite deuxième chambre intérieure (11), et avec l'extrémité opposée associée à des moyens de génération d'air comprimé.

11. Unité (1) selon la revendication 10, ***caractérisée en ce que*** lesdits moyens d'entrée (10) comprennent au moins un échangeur de chaleur (18) placé entre ledit premier et ledit deuxième conduit (14, 16).

12. Unité (1) selon l'une des revendications précédentes, ***caractérisée en ce que*** lesdits moyens (5) de dosage et de positionnement comprennent au moins une bobine (19) associée en rotation avec ledit support (2) de base et autour de laquelle est enroulé un fil (F) dudit matériau métallique.

13. Unité (1) selon la revendication 12, ***caractérisée en ce que*** lesdits moyens (5) de dosage et de positionnement comprennent au moins un dispositif d'avancée (23) de l'extrémité libre dudit fil (F) de matériau métallique provenant de ladite bobine (19) en direction de ladite zone à souder.

14. Unité (1) selon la revendication 13, ***caractérisée en ce que*** ledit dispositif d'avancée (23) comprend au moins une paire de roues (26) tournant en sens opposé, dont l'une est menante, entre lesquelles est inséré ledit fil (F) de matériau métallique.

15. Unité (1) selon la revendication 12, ***caractérisée en ce que*** lesdits moyens (5) de dosage et de positionnement comprennent au moins un capteur destiné à détecter la position de ladite extrémité libre du fil (F).

16. Unité (1) selon la revendication 12, ***caractérisée en ce que*** lesdits moyens (5) de dosage et de positionnement comprennent au moins une canule (27) avec une extrémité libre qui peut être positionnée sur ladite zone à souder et à l'intérieur de laquelle ledit fil (F) de matériau métallique est inséré de façon coulissante.

17. Unité (1) selon l'une des revendications précédentes, ***caractérisée en ce qu'**elle* comprend au moins un ventilateur de refroidissement (28) dudit dispositif (4) de chauffage et d'injection.

18. Unité (1) selon l'une des revendications précédentes, *caractérisée en ce qu*'elle comprend des moyens (29) de surveillance optique de ladite zone à souder.

19. Unité (1) selon la revendication 18, ***caractérisée en ce que*** lesdits moyens (29) de surveillance optique sont du type caméra vidéo.

20. Unité (1) selon la revendication 19, *caractérisée en ce qu*'elle comprend des moyens (31) de protection et/ou de nettoyage pour la lentille de ladite caméra vidéo.

21. Unité (1) selon la revendication 20, ***caractérisée en ce que*** lesdits moyens (31) de protection et/ou de nettoyage comprennent au moins une bande sensiblement transparente (32) et des moyens actionneurs (33, 34) pour faire glisser ladite bande avec au moins une portion placée sur la surface extérieure de la lentille de ladite caméra vidéo.
